# EUROPÄISCHE PATENTSCHRIFT

(11) **EP 4 051 617 B1**
(45) Veröffentlichungstag und Bekanntmachung des Hinweises auf die Patenterteilung: **07.10.2026**
(21) Anmeldenummer: 20796474.3
(22) Anmeldetag: 14.10.2020
(51) Int. Cl.: B66D 1/54, G01M 13/02

(54) **VERFAHREN ZUR BERECHNUNG EINES BETRIEBSSICHERHEITSFAKTORS DES GETRIEBEMOTORS EINER HUBANLAGE, VERFAHREN ZUM BETREIBEN EINER HUBANLAGE UND HUBANLAGE**
METHOD FOR CALCULATING AN OPERATIONAL RELIABILITY FACTOR OF A GEARED MOTOR OF A LIFTING SYSTEM, METHOD FOR OPERATING A LIFTING SYSTEM AND LIFTING SYSTEM
PROCÉDÉ POUR CALCULER UN FACTEUR DE FIABILITÉ OPÉRATIONNELLE D'UN MOTEUR À ENGRENAGES D'UN SYSTÈME DE LEVAGE, PROCÉDÉ POUR FAIRE FONCTIONNER UN SYSTÈME DE LEVAGE ET SYSTÈME DE LEVAGE.

(30) Priorität: 30.10.2019 DE 102019007553
(43) Veröffentlichungstag der Anmeldung: 07.09.2022
(73) Patentinhaber: SEW-EURODRIVE GmbH & Co. KG, 76646 Bruchsal (DE)
(72) Erfinder: MEPITNJUEN, Pierre, 68789 Sankt Leon-Rot (DE)
(86) Internationale Anmeldenummer: PCT/EP2020/025455
(87) Internationale Veröffentlichungsnummer: WO 2021/083542

(56) Entgegenhaltungen:
- EP-A2- 1 103 511
- WO-A1-2008/040349
- DE-U1- 29 503 416
- US-A1- 2015 379 783
- US-A1- 2019 031 474

## Beschreibung

Die Erfindung betrifft ein Verfahren zur Bestimmung eines Betriebssicherheitsfaktors des Getriebemotors einer Hubanlage und eine Hubanlage.

Zur Auslegung des Antriebs einer Hubanlage und zum Nachweis der Betriebssicherheit ist die Berechnung eines Betriebssicherheitsfaktors notwendig.

Aus der DE 295 03 416 U1 ist als nächstliegender Stand der Technik ein Gerät zur Ermittlung der dynamischen Beanspruchung an Bauteilen, Anlagen und Maschinen bekannt.

Aus der US 9 315 970 B2 ist ein System zum Monitoring von Stressschäden bekannt.

Aus der US 2019 / 0005742 A1 ist eine Mensch-Maschine Schnittstelle bekannt.

Aus der DE 10 2008 063 925 A1 ist ein Verfahren zur Ermittlung einer Restlebensdauer bekannt.

Die Erfindung beschäftigt sich mit der Aufgabe, ein derartiges Verfahren zur Berechnung eines Betriebssicherheitsfaktors zu vereinfachen und eine Prognose über die Restlebensdauer des Getriebemotors in der Hubanlage zu ermöglichen.

Erfindungsgemäß wird diese Aufgabe durch ein Verfahren mit den in Anspruch 1 angegebenen Merkmalen gelöst.

Wichtige Merkmale der Erfindung bei dem Verfahren sind,
dass die Hubanlage einen Elektromotor als Antrieb aufweist, der mit einem Getriebe zu einem Getriebemotor gekoppelt ist,
wobei in einem ersten Schritt ein vordefiniertes Lastkollektiv und anwendungsbezogene Kenndaten bereitgestellt werden und dass computergestützt aus dem Lastkollektiv und den bereitgestellten Kenndaten Belastungsdaten für das Getriebe, welches eine Seiltrommel antreibt, berechnet werden und dass in einem zweiten Schritt mit einem Betriebssicherheitsmodul computergestützt zu den berechneten Belastungsdaten der Betriebssicherheitsfaktor des Getriebes in Echtzeit berechnet wird.

Der Vorteil besteht nun darin, dass die Berechnung des Betriebssicherheitsfaktors in einem Vorgang und mit nur einem Werkzeug durchführbar ist. Mit dem erfindungsgemäßen Verfahren ist eine Auslegung von Standard und Nicht-Standard-Getriebemotoren durchführbar. Beispielsweise können die Lastkollektive und/oder die Kenndaten der Komponenten durch einen Katalog bereitgestellt werden oder berechnet werden.

Das erfindungsgemäße Verfahren ist vorzugsweise als Programm oder App zur Ausführung auf einem Computer, Smartphone oder Tablet ausgebildet.

Der Betriebssicherheitsfaktor kann vorzugsweise in Echtzeit berechnet werden, so dass jederzeit ein aktueller Betriebssicherheitsfaktor vorliegt.

In einer Ausführung umfassen die anwendungsbezogenen Kenndaten die sogenannte Baulage eines Getriebes, also den Winkel, den eine Längsachse des Getriebes zur Vertikallinie im Anwendungsfall einnimmt, und/oder die zu hebende Last und/oder andere geometrische und mechanische Angaben der Anlage und/oder die Betriebsdauer. Auf diese Weise ist es für den Anwender sehr leicht möglich, Betriebssicherheitsdaten oder allgemeiner gesagt standfestigkeitsrelevante Daten zu erhalten, beispielsweise für unterschiedliche Winkel, um etwa eine optimale Baulage zu ermitteln.

Es kann somit auch leicht optimiert werden, welcher Einbauraum für das Getriebe tatsächlich verwendet wird.

In einer zweckmäßigen Ausführung werden das Betriebssicherheitsmodul oder zumindest einige der zur Berechnung des Betriebssicherheitsfaktors herangezogenen Parameter, räumlich getrennt bereitgehalten.

Eine vorteilhafte Ausführung sieht vor, dass das Lastkollektiv aus mehreren, insbesondere vier, vorgegebenen Lastkollektiven, insbesondere automatisch, ausgewählt wird. Dadurch können beispielsweise normative Vorgaben erfüllt werden.

In einer vorteilhaften Ausführung werden zumindest ein Teil der anwendungsbezogenen Kenndaten in wenigstens einer Datenbank gespeichert und durch Auswählen oder über Bauteilkennzeichen automatisiert bereitgestellt. Auf diese Weise können Kenndaten zu einer ausgewählten Komponente, etwa einem Getriebe, automatisiert aus einer Datenbank bezogen werden. Dies hat den Vorteil, dass ein Anwender nur beispielsweise eine Typennummer oder dergleichen eindeutige Identifizierung angeben muss und alle weiteren zur Berechnung notwendigen Kenndaten automatisch aus der Datenbank bezogen werden.

In einer zweckmäßigen Ausführung ist eine Datenbank für Kenndaten von Kombinationen aus Antriebsmotoren, Getrieben und Seiltrommeln vorhanden. In einer weiteren zweckmäßigen Ausführung ist eine Datenbank für Kenndaten von Seiltrommeln vorhanden. Es können auch beide genannten Datenbanken vorhanden sein.

Eine Weiterbildung der Erfindung sieht vor, dass die Kenndaten der Seiltrommel aus anwendungsbezogenen Daten berechnet werden, insbesondere falls keine passenden Daten in einer Datenbank vorhanden sind. Dies kann beispielsweise für Spezialtrommeln zutreffen.

Bei einer vorteilhaften Ausgestaltung wird die Hubanlage mit der Seiltrommel betrieben, auf der ein Hubseil aufwickelbar ist, und mit dem Getriebe, das die Seiltrommel antreibt, und mit dem Elektromotor, der das Getriebe antreibt,
dadurch gekennzeichnet,
dass im Betrieb der Hubanlage ein Fahrdiagramm ermittelt wird,
dass aus dem Fahrdiagramm das Lastkollektiv berechnet wird, insbesondere wobei zu diesem Lastkollektiv ein kubischer Mittelwert berechnet wird,
dass mit dem berechneten Lastkollektiv und den anwendungsbezogenen Kenndaten die Belastungsdaten und dazu der Betriebssicherheitsfaktor des Getriebes berechnet werden, und
dass aus den Belastungsdaten und dem Betriebssicherheitsfaktor eine Restlaufzeit des Getriebes ermittelt wird.

Die tatsächliche Belastung einer Hubanlage ist in der Praxis üblicherweise deutlich geringer, als für die ursprüngliche Berechnung des Betriebssicherheitsfaktors angenommen. Daraus ergibt sich in der Regel eine signifikant längere Lebensdauer einer Anlage als durch den ursprünglich berechneten Betriebssicherheitsfaktor angegeben. Das erfindungsgemäße Verfahren bietet daher den Vorteil, dass der Betriebssicherheitsfaktor im laufenden Betrieb aktualisiert wird, wobei aktuelle Belastungsdaten aus dem Fahrdiagramm für die Berechnung benutzt werden.

Die Berechnung der Belastungsdaten und des Betriebssicherheitsfaktors kann dabei insbesondere nach einem zuvor beschriebenen, erfindungsgemäßen Verfahren erfolgen.

Ein Getriebe, das beispielsweise für eine maximale Last von 20 t ausgelegt ist, das jedoch im Betrieb bisher maximal mit 5 t belastet wurde, unterliegt einem geringeren Verschleiß als ursprünglich berechnet. Hier kann die erfindungsgemäße Berechnung einer tatsächlichen Restlaufzeit eine signifikante Verlängerung der Nutzungsdauer ergeben. Dadurch kann ein vorzeitiger, unnötiger Austausch einer Komponente vermieden werden, wodurch Kosten und Wartungsaufwand eingespart werden kann.

Gleichzeitig bietet das erfindungsgemäße Verfahren eine erhöhte Sicherheit, da auch ein übermäßiger Verschleiß erkannt werden kann. Dieser kann beispielsweise durch Kombinieren von Lasten verursacht werden, etwa Lasten, die größer und kleiner als die Nennlast sind. Oder durch eine kurzzeitige Stoßbelastung, die eventuell eine Überschreitung einer Material-Fließgrenze als Folge hat. **In** beiden Fällen wird mit einer geringeren tatsächlichen Restlaufzeit gerechnet.

**In** einem weiteren vorteilhaften Verfahren zum Betreiben einer Hubanlage mit einer Seiltrommel, auf der ein Hubseil aufwickelbar ist, mit einem Getriebe das die Seiltrommel antreibt und mit einem Elektromotor, der das Getriebe antreibt, wird zur Ermittlung des oder eines Fahrdiagramms mittels einer Kraftmessdose eine Zugkraft am Hubseil bestimmt und aus der bestimmten Kraft die Drehmomentbelastung der Abtriebswelle des Getriebes berechnet. Auf gleiche Weise wird die an der Abtriebswelle wirkende Radialkraft ermittelt. Konstruktionsbedingt kann die Seiltrommel separat gelagert werden, wodurch das Getriebe rein Drehmoment belastet ist und die Erfassung dieses Drehmoments vorzugsweise durch eine in der Abtriebswelle integrierte Drehmomentmesswelle erfolgen kann.

Eine Drehzahl des Elektromotors für das Fahrdiagramm wird beispielsweise an einer Motorsteuerung ermittelt, so dass ein zusätzlicher Drehzahlmesser nicht notwendig ist.

Aus den ermittelten Daten wird ein Fahrdiagramm erstellt, das auch zur Berechnung eines aktualisierten Betriebssicherheitsfaktors und/oder einer tatsächlichen Restlaufzeit verwendet werden kann.

Insbesondere vorteilhaft ist es daher, die beiden vorgenannten Verfahren zum Betreiben einer Hubanlage zu kombinieren, um auf diese Weise kostengünstig eine Berechnung eines Betriebssicherheitsfaktors und/oder einer tatsächlichen Restlaufzeit zu ermöglichen.

**In** einer vorteilhaften Ausführung werden auch die tatsächlichen Betriebsstunden ermittelt und zur Ermittlung der tatsächlichen Restlaufzeit berücksichtigt. Da zur ursprünglichen Berechnung des Betriebssicherheitsfaktors eine angenommene Betriebszeit verwendet wird, wirkt sich eine demgegenüber kürzere oder längere tatsächliche Betriebszeit ebenfalls auf die tatsächliche Restlaufzeit aus.

Insbesondere zweckmäßig ist es, wenn das Verfahren zur Aktualisierung der tatsächlichen Restlaufzeit in einem vorbestimmten Wiederhohlintervall wiederholt wird. Das Wiederholintervall kann abhängig von der erwarteten Laufzeit und/oder der Anwendung gewählt werden. Beispielsweise kann jeweils nach 10 Betriebsstunden eine neue Restlaufzeit aus dem dann aktuell vorliegenden Fahrdiagramm bestimmt werden.

Dazu ist es zweckmäßig, wenn für das Fahrdiagramm die Daten für den Zeitraum des Wiederhohlintervall fortlaufend, kontinuierlich aufgezeichnet werden.

Besonders zweckmäßig ist es, wenn die ermittelte tatsächliche Restlaufzeit und/oder die tatsächlichen Betriebsstunden angezeigt werden, beispielsweise an der Anlage selbst oder einer zugehörigen Steuereinheit. Auf diese Weise kann direkt erkannt werden, ob ein sicherer Betrieb noch möglich ist, oder ob eventuell Wartungsarbeiten durchgeführt werden müssen.

**In** einer Weiterbildung kann aus der tatsächlichen Restlaufzeit und den tatsächlichen Betriebsstunden ein Wartungsintervall und/oder ein Wartungszeitpunkt ermittelt werden, insbesondere unter Berücksichtigung des aktualisierten Betriebssicherheitsfaktors. Insbesondere kann es vorgesehen sein, dass eine Warnung ausgegeben wird, sobald ein berechneter Betriebssicherheitsfaktor und/oder eine berechnete Restlaufzeit einer Komponente der Hubanlage einen Alarmschwellwert unterschreitet.

Die Erfindung umfasst weiterhin eine Hubanlage mit einer Seiltrommel, auf der ein Hubseil aufwickelbar ist, mit einem Getriebe das die Seiltrommel antreibt und mit einem Elektromotor, der das Getriebe antreibt. Diese Hubanlage ist dadurch gekennzeichnet, dass sie eine Vorrichtung zur Ermittlung der Drehmomentbelastung der Abtriebswelle des Getriebes aufweist,
dass sie eine Fahrdiagrammeinheit zur Aufzeichnung eines Fahrdiagramms aufweist und
dass sie eine Berechnungseinheit zur Berechnung einer tatsächlichen Restlaufzeit aufweist.

Auf diese Weise kann im Betrieb die tatsächliche Belastung wesentlicher Komponenten ermittelt werden und zur Berechnung eines aktualisierten Betriebssicherheitsfaktors sowie einer tatsächlichen Restlebensdauer verwendet werden. Eine solche Hubanlage kann dadurch wesentlich effizienter und kostengünstiger betrieben werden.

Die Aufzeichnung der Drehmomentbelastung des Getriebes kann über eine Drehmomentmesswelle erfolgen. Dabei kann die Schnittstelle oder Lagerungsart der Trommel zum Getriebe entscheidend für die Auswahl des geeigneten Messmittels sein.

In einer vorteilhaften Ausführung ist am Hubseil eine Kraftmessdose zur Ermittlung der Zugbelastung am Hubseil angeordnet. Damit kann die tatsächliche Kraft am Hubseil ermittelt werden. Aus dieser ermittelten Kraft ist auch die Drehmomentbelastung der Abtriebswelle des Getriebes ermittelbar.

Aus diesen Daten kann dann ein Fahrdiagramm erstellt werden, das zur weiteren Berechnung der Restlaufzeit dient.

In einer Ausführung ist die Berechnungseinheit zur Berechnung eines Wartungsintervalls, eines Lastkollektivs und/oder von Belastungsdaten ausgebildet. Auf diese Weise kann eine bedarfsgerechte Wartung der Hubanlage durchgeführt werden, wodurch Kosten und Aufwand gespart werden können.

Insbesondere vorteilhaft kann es daher sein, wenn die Hubanlage eine Anzeigeeinheit aufweist, die zur Anzeige der tatsächlichen Betriebsstunden und/oder der berechneten Restlaufzeit und/oder einer Warnung ausgebildet ist.

Die Erfindung wird nun anhand von Abbildungen näher erläutert:
Es zeigt:
Figur 1: ein Ablaufdiagramm zur erfindungsgemäßen Bestimmung eines Betriebssicherheitsfaktors,
Figur 2: ein Blockschaltbild einer beispielhaften Hubanlage mit einer Kraftmessdose
Figur 3: ein Blockschaltbild einer beispielhaften Hubanlage mit einer Drehmomentmesswelle
Figur 4: ein Ablaufdiagramm zur erfindungsgemäßen Bestimmung einer tatsächlichen Restlaufzeit.

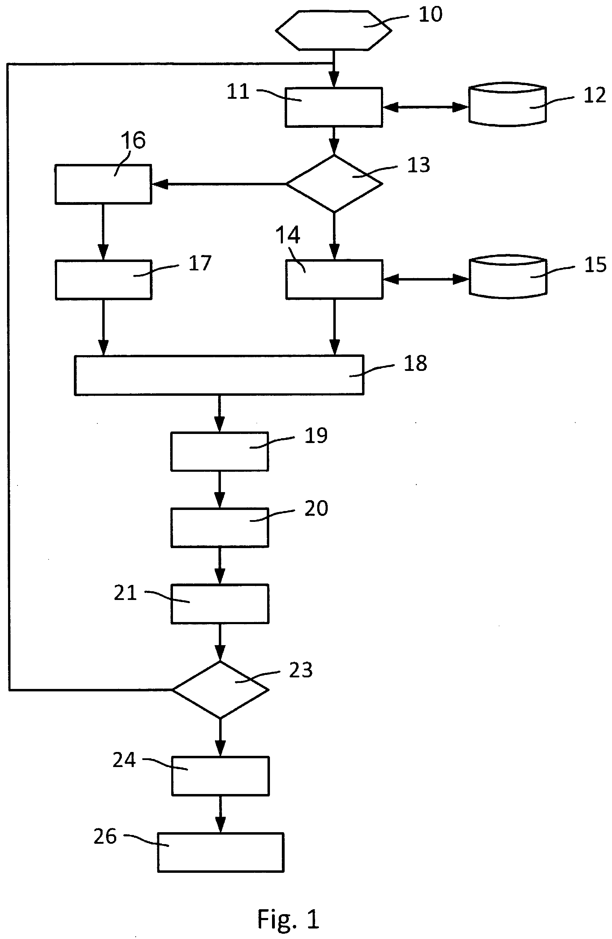

In der Figur 1 ist ein Ablaufdiagramm eines erfindungsgemäßen Verfahrens zur Berechnung eines Betriebssicherheitsfaktors des Getriebemotors einer Hubanlage gezeigt. Eine solche Hubanlage kann ein mobiler oder stationärer Kran sein.

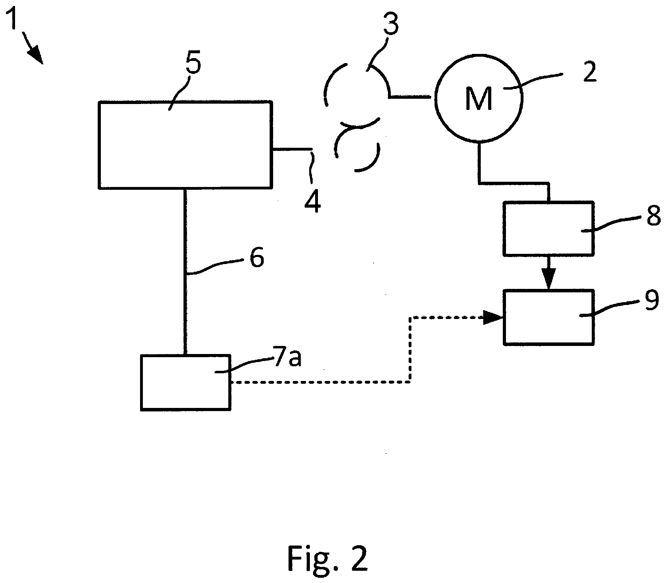

Die Figur 2 zeigt beispielhaft ein Blockschaltbild einer erfindungsgemäßen Hubanlage 1. Die Hubanlage 1 weist einen Elektromotor 2 als Antrieb auf, der mit einem Getriebe 3 zu einem Getriebemotor gekoppelt ist. Am Abtrieb 4 des Getriebes 3 ist eine Seiltrommel 5 angeordnet, auf der ein Hubseil 6 aufwickelbar ist. Am freien Ende des Hubseils 6 ist eine Kraftmessdose 7a angeordnet, mit der die Zugbelastung im Hubseil 6 ermittelt werden kann. An der Kraftmessdose 7a kann ein Haken oder eine andere Aufnahme zum Anhängen einer Nutzlast angeordnet sein.

Die Hubanlage 1 weist eine Motorsteuerung 8 auf, die mit einer Berechnungseinheit 9 verbunden ist und an diese beispielsweise die Motordrehzahl und die tatsächlichen Betriebsstunden liefert. Die Berechnungseinheit 9 ist ebenfalls mit der Kraftmessdose 7a verbunden, so dass die ermittelten Kräfte aufgezeichnet werden können. Die Berechnungseinheit 9 ist vorzugsweise auch zur Aufzeichnung von Fahrdiagrammen ausgebildet.

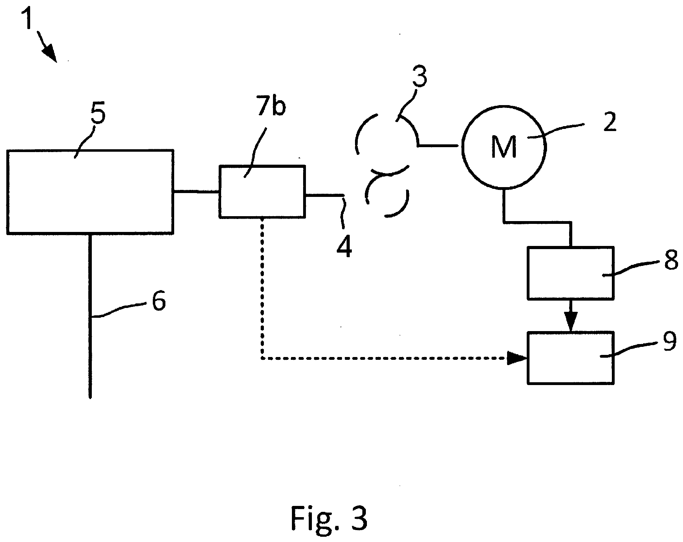

Die Figur 3 zeigte eine Hubanlage 1 auf, die im Wesentlichen der Hubanlage 1 der Figur 2 entspricht. Die Hubanlage 1 weist einen Elektromotor 2 als Antrieb auf, der mit einem Getriebe 3 zu einem Getriebemotor gekoppelt ist. Am Abtrieb 4 des Getriebes 3 ist eine Drehmomentmesswelle 7b integriert. Die Seiltrommel 5 ist in diesem Fall so gelagert, dass eine querkraftfreie Drehmomentübertragung zum Getriebe erfolgt. Am Ende der Abtriebswelle 4 ist eine Seiltrommel 5 angeordnet, auf der ein Hubseil 6 aufwickelbar ist. Am freien Ende des Hubseils 6 kann ein Haken oder eine andere Aufnahme zum Anhängen einer Nutzlast angeordnet sein. Die Berechnungseinheit 9 ist hier mit der Drehmomentmesswelle 7b verbunden, so dass die ermittelten Drehmomente aufgezeichnet werden können.

Das Verfahren der Figur 1 startet mit einer Kundenanfrage 10 zum Getriebemotor einer Hubanlage. Die Kundenanfrage kann verschiedene Randbedingungen, wie beispielsweise eine maximale Nutzlast oder dergleichen, aufweisen. In einem nachfolgenden Schritt 11 wird ein zur Anfrage passender Getriebemotor ausgewählt und ein vordefiniertes Lastkollektiv des Getriebes bereitgestellt, wenn nicht vorher vom Kunden anders festgelegt. Zur Auswahl des Getriebemotors steht eine Getriebemotordatenbank 12 zur Verfügung, in der Kenndaten der gewählten Antriebskombination hinterlegt sind.

Anschließend wird geprüft 13, ob die Seiltrommel ebenfalls eine Standardseiltrommel ist. Falls ja wird eine passende Seiltrommel ausgewählt 14 und deren Kenndaten bereitgestellt. Bei der Auswahl steht eine Seiltrommeldatenbank 15 zur Verfügung, in der Kenndaten verschiedener Seiltrommeln hinterlegt sind.

Falls die Seiltrommel keine Standardseiltrommel ist, handelt es sich um eine Spezialtrommel. In einem nachfolgenden Schritt 16 werden Daten der Spezialtrommel erfasst und in einem darauffolgenden Schritt 17 die Kenndaten dieser Spezialtrommel berechnet.

Unabhängig von der Art der Seiltrommel werden in einem gemeinsamen, nachfolgenden Schritt 18 die Nutzlast und Seilzugübersetzung als Anwendungsdaten ermittelt. Ebenso werden die Einbaulage des Getriebes und der Kraftfluss im Seilzug als weitere Anwendungsdaten ermittelt. Schließlich werden in einem nachfolgenden Schritt 19 aus den bereitgestellten Anwendungsdaten die passenden Daten, insbesondere das Lastkollektiv, gemäß den anwendbaren Berechnungsgrundlagen ausgewählt und die Belastungsdaten an der Getriebeabtriebswelle berechnet.

In einem darauffolgenden Schritt 20 wird, vorzugsweise in einem Betriebssicherheitsmodul, aus den Belastungsdaten ein Betriebssicherheitsfaktor berechnet.

Im nächsten Schritt 21 wird die Komponentenauswahl, das heißt der aus der Datenbank automatisch ausgewählte Getriebemotor, und die zugehörigen Berechnungsergebnisse der Belastungsdaten und des Betriebssicherheitsfaktors ausgegeben.

In einem Kontrollschritt 23 wird geprüft, ob das Ergebnis dem Kundenwunsch oder den Anforderungen gerecht wird. Falls nein, wird der Vorgang mit Auswahl 11 eines anderen Getriebemotors erneut gestartet.

Falls das Ergebnis zufriedenstellend ausfällt, wird ein Bericht erstellt 24, in dem alle Ergebnisse präsentiert sind.

Dieser Bericht kann in einer Bestellung 26 oder Auftragsbestätigung enthalten sein.

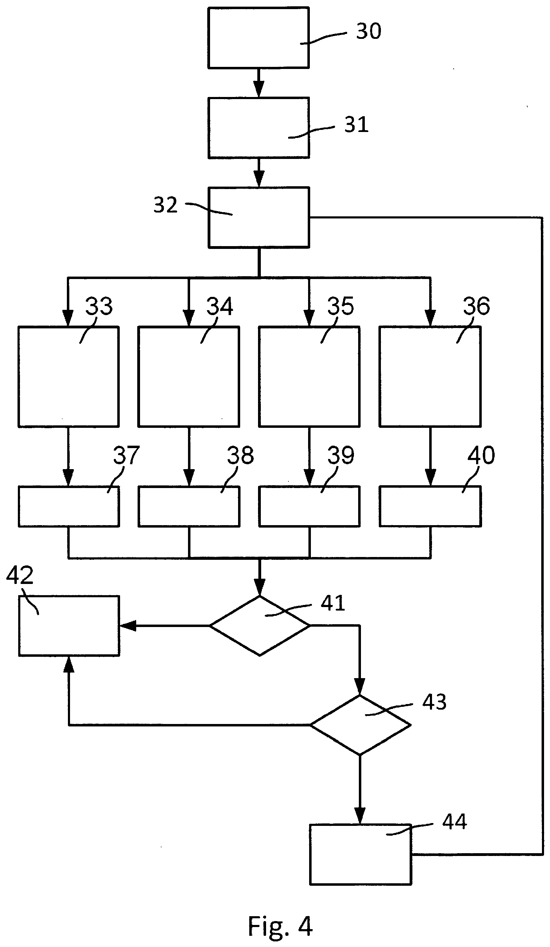

Die Figur 4 zeigt ein Ablaufdiagramm eines erfindungsgemäßen Verfahrens zum Betreiben einer Hubanlage, beispielsweise gemäß Figur 2.

Das Verfahren startet in Schritt 30. In einem nächsten Schritt 31 wird zunächst das Wiederhohlintervall festgelegt, in dem jeweils eine tatsächliche Restlaufzeit berechnet werden soll. Dabei kann das Wiederhohlintervall von der Anwendung und der Betriebsdauer abhängen. Das Wiederhohlintervall kann pro Stunde, pro Tag, pro Woche oder in einem beliebigen anderen Zeitraum angegeben werden.

In einem nachfolgenden Schritt 32 wird ein Fahrdiagramm aufgezeichnet, in dem die tatsächliche Belastung gegenüber der Betriebszeit aufgetragen ist. Aus dem aufgezeichneten Fahrdiagramm wird ein Lastkollektiv umgerechnet, das zur Berechnung des Betriebssicherheitsfaktors und/oder der Lebensdauer dient.

Dabei können auch weitere Parameter, wie etwa die Motortemperatur, Umgebungstemperatur oder Getriebeölsumpftemperatur, mit einbezogen werden.

Die Aufzeichnung des Fahrdiagramms erfolgt mindestens im gewählten Wiederhohlintervall. Die Frequenz, mit der die Messwerte im Fahrdiagramm aufgezeichnet werden, kann fest vorgegeben sein, oder vom Wiederhohlintervall abhängen. Prinzipiell ist es jedoch unabhängig vom Wiederhohlintervall zweckmäßig mehrmals pro Minute eine Messwerterfassung durchzuführen. Dadurch kann ein genaues Fahrdiagramm mit einer hohen zeitlichen Auflösung aufgezeichnet werden.

Wenn das Wiederholintervall abgelaufen ist, wird aus dem aufgezeichneten Fahrdiagramm ein Lastkollektiv umgerechnet und in Abhängigkeit der Schadensdynamik, insbesondere die Wöhlerkurve, der einzelnen Getriebemotorkomponenten wie Wellen 33, Verzahnteile 34, Wälzlager 35 und Wellen-Naben-Verbindungen 36 je ein Betriebssicherheitsfaktor und/oder eine Lebensdauer berechnet.

Es wird dann für alle Wellen geprüft 37, ob ein aus dem Lastkollektiv ermittelter Sicherheitsfaktor über einem zugehörigen Sicherheitsschwellwert liegt.

Weiter wird für alle Verzahnteile geprüft 38, ob ein aus dem Lastkollektiv ermittelter Sicherheitsfaktor über einem zugehörigen Sicherheitsschwellwert liegt.

Weiter wird für die Wälzlager geprüft 39, ob eine aus dem Lastkollektiv ermittelte tatsächliche Lebensdauer über einer zugehörigen maximalen Lebensdauer liegt.

Schließlich wird für die Wellen-Naben-Verbindung geprüft 40, ob ein aus dem Lastkollektiv ermittelter Sicherheitsfaktor über einem zugehörigen Sicherheitsschwellwert liegt.

Es wird dann geprüft 41, ob alle Bedingungen erfüllt sind. Falls nein, wird in Schritt 42 eine Warnung ausgegeben.

Falls ja, wird zusätzlich geprüft, ob eine der Komponenten aus Wellen, Verzahnteile, Wälzlager oder Wellen-Nabe-Verbindungen nahe an ihrem jeweiligen Lebensdauerlimit liegt. Falls ja, wird ebenfalls eine Warnung ausgegeben 42. Falls nein, kann die Anlage weiter betrieben werden und es wird in Schritt 44 eine Restlaufzeit ermittelt und ausgegeben.

Das Fahrdiagramm 32 wird dann wieder fortlaufend, kontinuierlich aufgezeichnet.

### Bezugszeichenliste

- 1: Hubanlage
- 2: Elektromotor
- 3: Getriebe
- 4: Abtriebswelle
- 5: Seiltrommel
- 6: Hubseil
- 7a: Kraftmessdose
- 7b: Drehmomentmesswelle
- 8: Motorsteuerung
- 9: Berechnungseinheit
- 10 - 26: Verfahrensschritte zur Bestimmung eines Betriebssicherheitsfaktors
- 30 - 44: Verfahren zur iterativen Bestimmung einer Restlaufzeit

## Patentansprüche

1. Verfahren zur Bestimmung eines Betriebssicherheitsfaktors des Getriebemotors einer Hubanlage (2),
wobei die Hubanlage (1) einen Elektromotor (2) als Antrieb aufweist, der mit einem Getriebe (3) zu einem Getriebemotor gekoppelt ist,
**dadurch gekennzeichnet,**
**dass** in einem ersten Schritt ein vordefiniertes Lastkollektiv und anwendungsbezogene Kenndaten bereitgestellt werden und dass computergestützt aus dem Lastkollektiv und den bereitgestellten Kenndaten Belastungsdaten für das Getriebe (3), welches eine Seiltrommel (5) antreibt, berechnet werden und
**dass** in einem zweiten Schritt (20) mit einem Betriebssicherheitsmodul computergestützt zu den berechneten Belastungsdaten der Betriebssicherheitsfaktor des Getriebes (3) in Echtzeit berechnet wird.

2. Verfahren nach Anspruch 1, **dadurch gekennzeichnet, dass** die anwendungsbezogenen Kenndaten eine Baulage eines Getriebes (3), insbesondere einen Winkel, den eine Längsachse des Getriebes (3) zur Vertikallinie im Anwendungsfall einnimmt, und/oder eine zu hebende Last und/oder andere geometrische und/oder mechanische Angaben der Anlage und/oder eine Betriebsdauer umfassen.

3. Verfahren nach Anspruch 1 oder 2, **dadurch gekennzeichnet, dass** das Betriebssicherheitsmodul oder zumindest einige der zur Berechnung des Betriebssicherheitsfaktors herangezogenen Kenndaten räumlich getrennt bereitgehalten werden.

4. Verfahren nach einem der Ansprüche 1 bis 3, **dadurch gekennzeichnet, dass** das Lastkollektiv aus mehreren, insbesondere vier, vorgegebenen Lastkollektiven, insbesondere automatisch, ausgewählt wird.

5. Verfahren nach einem der Ansprüche 1 bis 3, **dadurch gekennzeichnet, dass** zumindest ein Teil der anwendungsbezogenen Kenndaten in wenigstens einer Datenbank (12, 15) gespeichert ist und durch Auswählen oder über Bauteilkennzeichen automatisiert bereitgestellt werden.

6. Verfahren nach einem der Ansprüche 1 bis 3, **dadurch gekennzeichnet, dass** eine Datenbank (12) für Kenndaten von Kombinationen aus Antriebsmotoren (2), Getrieben (3) und Seiltrommel (5) vorhanden ist und/oder dass eine Datenbank (15) für Kenndaten von Seiltrommeln (5) vorhanden ist und/oder dass die Kenndaten der Seiltrommel (5) aus anwendungsbezogenen Daten berechnet (17) wird.

7. Verfahren nach einem der Ansprüche 1 bis 6, wobei die Hubanlage (1) mit der Seiltrommel (5) betrieben wird, auf der ein Hubseil (6) aufwickelbar ist, und mit dem Getriebe (3), das die Seiltrommel (5) antreibt, und mit dem Elektromotor (2), der das Getriebe (3) antreibt, **dadurch gekennzeichnet,**
**dass** im Betrieb der Hubanlage (1) ein Fahrdiagramm ermittelt wird (32),
**dass** aus dem Fahrdiagramm das Lastkollektiv berechnet wird, insbesondere wobei zu diesem Lastkollektiv ein kubischer Mittelwert berechnet wird,
**dass** mit dem berechneten Lastkollektiv und den anwendungsbezogenen Kenndaten die Belastungsdaten und dazu der Betriebssicherheitsfaktor des Getriebes (3) berechnet werden (37, 38, 39, 40), und
**dass** aus den Belastungsdaten und dem Betriebssicherheitsfaktor eine Restlaufzeit des Getriebes (3) ermittelt wird (44).

8. Verfahren nach Anspruch 7,
**dadurch gekennzeichnet, dass** zur Ermittlung des Fahrdiagramms mittels,
einer Kraftmessdose (7a) eine Zugkraft am Hubseil (6) bestimmt wird und aus der bestimmten Kraft die Drehmoment- und radiale Belastung der Abtriebswelle (4) berechnet wird, oder mittels einer Drehmomentmesswelle (7b) die Drehmomentbelastung der Abtriebswelle (4) aufgezeichnet wird und dass die Drehzahl des Elektromotors (2) an einer Motorsteuerung ermittelt wird.

9. Verfahren nach Anspruch 7 oder 8, **dadurch gekennzeichnet, dass** die tatsächlichen Betriebsstunden ermittelt werden und zur Ermittlung der Restlaufzeit berücksichtigt werden.

10. Verfahren nach einem der Ansprüche 7 bis 9, **dadurch gekennzeichnet, dass** das Verfahren zur Aktualisierung der Restlaufzeit in einem vorbestimmten Intervall wiederholt wird.

11. Verfahren nach einem der Ansprüche 7 bis 10, **dadurch gekennzeichnet, dass** die Restlaufzeit des Getriebes (3) und/oder die tatsächlichen Betriebsstunden angezeigt werden und/oder dass aus der Restlaufzeit des Getriebes (3) und den tatsächlichen Betriebsstunden ein Wartungsintervall oder ein Wartungszeitpunkt ermittelt wird und/oder dass eine Warnung ausgegeben wird, sobald ein berechneter Betriebssicherheitsfaktor und/oder eine berechnete Restlaufzeit einer Komponente der Hubanlage einen Alarmschwellwert unterschreitet.

12. Hubanlage (1) mit einer Seiltrommel (5), auf der ein Hubseil (6) aufwickelbar ist, mit einem Getriebe (3) das die Seiltrommel (5) antreibt und mit einem Elektromotor (2), der das Getriebe (3) antreibt,
**dadurch gekennzeichnet,**
**dass** die Hubanlage (1) eine Vorrichtung (7a, 7b) zur Ermittlung der Drehmomentbelastung der Abtriebswelle (4) des Getriebes (3) aufweist,
**dass** die Hubanlage (1) eine Fahrdiagrammeinheit (9) zur Aufzeichnung eines Fahrdiagramms aufweist und
**dass** die Hubanlage (1) eine Berechnungseinheit (9) zur Berechnung einer Restlaufzeit des Getriebes (3) aufweist, wobei die Berechnungseinheit (9) zur Berechnung eines Lastkollektivs und/oder von Belastungsdaten und daraus eines Betriebssicherheitsfaktors des Getriebes ausgebildet ist.

13. Hubanlage nach Anspruch 12, **dadurch gekennzeichnet, dass** am Hubseil (6) eine Kraftmessdose (7a) zur Ermittlung der Zugbelastung am Hubseil (6) angeordnet ist und aus der ermittelten Kraft die Drehmoment- und radiale Belastung der Abtriebswelle (4) ermittelbar ist oder dass in der Abtriebswelle (4) eine Drehmomentmesswelle (7b) zur Ermittlung des getriebeabtriebseitigen Drehmoments integriert ist.

14. Hubanlage nach einem der Ansprüche 12 oder 13, **dadurch gekennzeichnet, dass** die Hubanlage (1) eine Anzeigeeinheit (47) aufweist, die zur Anzeige der tatsächlichen Betriebsstunden und/oder der berechneten Restlaufzeit und/oder einer Warnung ausgebildet ist.

## Claims

1. A method for determining an operational safety factor of the geared motor of a lifting installation (2),
wherein the lifting installation (1) has an electric motor (2) as drive which is coupled with a gear unit (3) to form a geared motor,
**characterised in that**
in a first step a predefined load spectrum and application-related characteristic data are provided, and **in that** load data for the gear unit (3), which drives a cable drum (5), are calculated in a computer-aided manner from the load spectrum, and the characteristic data provided, and
**in that** in a second step (20) the operational safety factor of the gear unit (3) is calculated in real time with an operational safety module in a computer-aided manner in relation to the calculated load data.

2. A method according to claim 1, **characterised in that** the application-related characteristic data comprise an installation position of a gear unit (3), in particular an angle which a longitudinal axis of the gear unit (3) assumes in relation to the vertical line in the application case, and/or a load which is to be lifted and/or other geometric and/or mechanical particulars of the installation, and/or a duration of operation.

3. A method according to claim 1 or 2, **characterised in that** the operational safety module or at least some of the characteristic data used for calculating the operational safety factor are kept spatially separate.

4. A method according to one of claims 1 to 3, **characterised in that** the load spectrum is selected, in particular automatically, from a plurality of, in particular four, specified load spectra.

5. A method according to one of claims 1 to 3, **characterised in that** at least part of the application-related characteristic data is stored in at least one database (12, 15) and is provided in an automated manner by selecting or by way of component identifiers.

6. A method according to one of claims 1 to 3, **characterised in that** a database (12) for characteristic data of combinations of drive motors (2), gear units (3) and cable drum (5) is present, and/or **in that** a database (15) for characteristic data of cable drums (5) is present, and/or **in that** the characteristic data of the cable drum (5) is calculated (17) from application-related data.

7. A method according to one of claims 1 to 6, wherein the lifting installation (1) is operated with the cable drum (5), on which a lifting cable (6) can be wound, and with the gear unit (3), which drives the cable drum (5), and with the electric motor (2), which drives the gear unit (3),
**characterised in that**
during operation of the lifting installation (1) an operating diagram is ascertained (32),
the load spectrum is calculated from the operating diagram, in particular with a cubic mean being calculated for this load spectrum,
the load data and in addition the operational safety factor of the gear unit (3) are calculated (37, 38, 39, 40) with the calculated load spectrum and the application-related characteristic data, and
a remaining running time of the gear unit (3) is ascertained (44) from the load data and the operational safety factor.

8. A method according to claim 7,
**characterised in that** to ascertain the operating diagram a tensile force on the lifting cable (6) is determined by means of a load cell (7a), and the torque load and radial load of the output shaft (4) is calculated from the force determined, or the torque load of the output shaft (4) is recorded by means of a torque measuring shaft (7b), and **in that** the rotational speed of the electric motor (2) is ascertained at a motor control unit.

9. A method according to claim 7 or 8, **characterised in that** the actual hours operating are ascertained and taken into account for ascertaining the remaining running time.

10. A method according to one of claims 7 to 9, **characterised in that** the method is repeated at a predetermined interval to update the remaining running time.

11. A method according to one of claims 7 to 10, **characterised in that** the remaining running time of the gear unit (3) and/or the actual hours operating is/are displayed, and/or **in that** a maintenance interval or a maintenance date is ascertained from the remaining running time of the gear unit (3) and the actual hours operating, and/or **in that** a warning is issued as soon as a calculated operational safety factor and/or a calculated remaining running time of a component of the lifting installation falls below an alarm threshold value.

12. A lifting installation (1) with a cable drum (5), on which a lifting cable (6) can be wound, with a gear unit (3), which drives the cable drum (5), and with an electric motor (2), which drives the gear unit (3),
**characterised in that**
the lifting installation (1) has a device (7a, 7b) for ascertaining the torque load of the output shaft (4) of the gear unit (3),
the lifting installation (1) has an operating diagram unit (9) for recording an operating diagram, and
the lifting installation (1) has a calculation unit (9) for calculating a remaining running time of the gear unit (3), with the calculation unit (9) being designed to calculate a load spectrum and/or load data and therefrom an operational safety factor of the gear unit.

13. A lifting installation according to claim 12, **characterised in that** a load cell (7a) for ascertaining the tensile load on the lifting cable (6) is arranged on the lifting cable (6), and the torque load and radial load of the output shaft (4) can be ascertained from the ascertained force, or **in that** a torque measuring shaft (7b) for ascertaining the torque on the gear-unit output side is integrated in the output shaft (4).

14. A lifting installation according to one of claims 12 or 13, **characterised in that** the lifting device (1) has a display unit (47) which is designed to display the actual hours operating and/or the calculated remaining running time and/or a warning.

## Revendications

1. Procédé pour la détermination d'un facteur de sécurité de fonctionnement du motoréducteur d'une installation de levage (2),
dans lequel l'installation de levage (1) comprend un moteur électrique (2) comme entraînement, qui est couplé à un réducteur (3) pour former un motoréducteur,
**caractérisé en ce que**,
dans une première étape, un collectif de charges prédéfini et des données caractéristiques spécifiques à l'application sont maintenus disponibles et que, assisté par ordinateur, à partir du collectif de charges et des données caractéristiques maintenues disponibles, des données de sollicitation pour le réducteur (3), lequel entraîne un tambour à câble (5), sont calculées et
dans une deuxième étape (20), avec un module de sécurité de fonctionnement, assisté par ordinateur, le facteur de sécurité de fonctionnement du réducteur (3) est calculé en temps réel à partir des données de sollicitation calculées.

2. Procédé selon la revendication 1, **caractérisé en ce que** les données caractéristiques spécifiques à l'application comprennent une position de montage d'un réducteur (3), en particulier un angle que l'axe longitudinal du réducteur (3) forme avec la ligne verticale dans le cas d'application, et/ou une charge à lever et/ou d'autres indications géométriques et/ou indications mécaniques de l'installation et/ou une durée de fonctionnement.

3. Procédé selon la revendication 1 ou 2, **caractérisé en ce que** le module de sécurité de fonctionnement ou au moins certaines des données caractéristiques utilisées pour le calcul du facteur de sécurité de fonctionnement sont maintenus disponibles séparé spatialement.

4. Procédé selon l'une des revendications 1 à 3, **caractérisé en ce que** le collectif de charges est sélectionné parmi plusieurs, en particulier quatre, collectifs de charges prédéfinis, en particulier automatiquement.

5. Procédé selon l'une des revendications 1 à 3, **caractérisé en ce qu'**au moins une partie des données caractéristiques spécifiques à l'application est stockée dans au moins une base de données (12, 15) et est maintenue disponible de manière automatisée par sélection ou via des identifiants de composants.

6. Procédé selon l'une des revendications 1 à 3, **caractérisé en ce qu'**une base de données (12) pour des données caractéristiques de combinaisons de moteurs d'entraînement (2), de réducteurs (3) et de tambours à câble (5) est présente et/ou qu'une base de données (15) pour des données caractéristiques de tambours à câble (5) est présente et/ou que les données caractéristiques du tambour à câble (5) sont calculées (17) à partir de données spécifiques à l'application.

7. Procédé selon l'une des revendications 1 à 6, dans lequel l'installation de levage (1) est exploitée avec le tambour à câble (5) sur lequel un câble de levage (6) est enroulable, et avec le réducteur (3) qui entraîne le tambour à câble (5), et avec le moteur électrique (2) qui entraîne le réducteur (3), **caractérisé en ce**
**qu'**en fonctionnement de l'installation de levage (1), un diagramme de fonctionnement est déterminé (32),
**que** le collectif de charges est calculé à partir du diagramme de fonctionnement, en particulier qu'une moyenne cubique est calculée pour ce collectif de charges,
**que**, avec le collectif de charges calculé et les données caractéristiques spécifiques à l'application, les données de sollicitation et le facteur de sécurité de fonctionnement du réducteur (3) sont calculés (37, 38, 39, 40), et
**que**, à partir des données de sollicitation et du facteur de sécurité de fonctionnement, une durée de vie résiduelle du réducteur (3) est déterminée (44).

8. Procédé selon la revendication 7, **caractérisé en ce que**, pour la détermination du diagramme de fonctionnement, une force de traction sur le câble de levage (6) est déterminée au moyen d'une cellule de mesure de force (7a) et, à partir de la force déterminée, la sollicitation en couple et la sollicitation radiale de l'arbre de sortie (4) sont calculées, ou, au moyen d'un arbre de mesure de couple (7b), la sollicitation en couple de l'arbre de sortie (4) est enregistrée, et que la vitesse de rotation du moteur électrique (2) est déterminée sur une commande de moteur.

9. Procédé selon la revendication 7 ou 8, **caractérisé en ce que** les heures de fonctionnement réelles sont déterminées et prises en compte pour la détermination de la durée de vie résiduelle.

10. Procédé selon l'une des revendications 7 à 9, **caractérisé en ce que** le procédé pour la mise à jour de la durée de vie résiduelle est répété à un intervalle prédéterminé.

11. Procédé selon l'une des revendications 7 à 10, **caractérisé en ce que** la durée de vie résiduelle du réducteur (3) et/ou les heures de fonctionnement réelles sont affichées et/ou qu'à partir de la durée de vie résiduelle du réducteur (3) et des heures de fonctionnement réelles, un intervalle de maintenance ou un moment de maintenance est déterminé et/ou qu'un avertissement est émis dès qu'un facteur de sécurité de fonctionnement calculé et/ou une durée de vie résiduelle calculée d'un composant de l'installation de levage est inférieure à un seuil d'alarme.

12. Installation de levage (1) avec un tambour à câble (5), sur lequel un câble de levage (6) est enroulable, avec un réducteur (3) qui entraîne le tambour à câble (5) et avec un moteur électrique (2) qui entraîne le réducteur (3),
**caractérisée en ce**
**que** l'installation de levage (1) comprend un dispositif (7a, 7b) pour la détermination de la sollicitation en couple de l'arbre de sortie (4) du réducteur (3),
**que** l'installation de levage (1) comprend une unité de diagramme de fonctionnement (9) pour l'enregistrement d'un diagramme de fonctionnement et
**que** l'installation de levage (1) comprend une unité de calcul (9) pour le calcul d'une durée de vie résiduelle du réducteur (3), l'unité de calcul (9) étant conçue pour le calcul d'un collectif de charges et/ou de données de sollicitation et, à partir de celles-ci, d'un facteur de sécurité de fonctionnement du réducteur.

13. Installation de levage selon la revendication 12, **caractérisée en ce qu'**une cellule de mesure de force (7a) pour la détermination de la sollicitation en traction sur le câble de levage (6) est disposée sur le câble de levage (6) et qu'à partir de la force déterminée, la sollicitation en couple et la sollicitation radiale de l'arbre de sortie (4) peuvent être déterminées, ou qu'un arbre de mesure de couple (7b) pour la détermination du couple côté sortie du réducteur est intégré dans l'arbre de sortie (4).

14. Installation de levage selon l'une des revendications 12 ou 13, **caractérisée en ce que** l'installation de levage (1) comprend une unité d'affichage (47) conçue pour l'affichage des heures de fonctionnement réelles et/ou de la durée de vie résiduelle calculée et/ou d'un avertissement.
